## Europäisches Patentamt

## European Patent Office

## Office européen des brevets

(11) Veröffentlichungsnummer: **0 126 467**
**B1**

(12) **EUROPÄISCHE PATENTSCHRIFT**

(45) Veröffentlichungstag der Patentschrift:
07.12.88

(21) Anmeldenummer: **84105712.8**

(22) Anmeldetag: **18.05.84**

(51) Int. Cl.⁴: **F 02 B 33/06,** F 02 B 39/04

(54) Verbrennungsmotor mit einem von der Motorkurbelwelle aus mechanisch angetriebenen Verdrängerlader.

(30) Priorität: **18.05.83 DE 3318094**
**18.05.83 DE 3318113**
**18.05.83 DE 3318136**
**18.05.83 DE 3318161**

(43) Veröffentlichungstag der Anmeldung:
**28.11.84 Patentblatt 84/48**

(45) Bekanntmachung des Hinweises auf die Patenterteilung:
**07.12.88 Patentblatt 88/49**

(84) Benannte Vertragsstaaten:
**DE FR GB IT SE**

(56) Entgegenhaltungen:
**FR-A- 437 926**
**GB-A- 396 463**
**GB-A- 1 024 846**
**US-A- 1 690 080**
**US-A- 2 391 163**

(73) Patentinhaber: **Schatz, Oskar, Dr.-Ing.,**
**Waldpromenade 16, D-8035 Gauting (DE)**

(72) Erfinder: **Schatz, Oskar, Dr.-Ing., Waldpromenade 16,**
**D-8035 Gauting (DE)**

(74) Vertreter: **Lamprecht, Helmut, Dipl.-Ing.,**
**Corneliusstrasse 42, D-8000 München 5 (DE)**

**Beschreibung**

Die Erfindung betrifft einen Verbrennungsmotor der Kolbenbauart mit einem von der Motorkurbelwelle aus mechanisch angetriebenen, mindestens eine in ihrem Volumen veränderbare Ladeluftkammer aufweisenden Verdrängerlader zur Verdichtung der Ladeluft, wobei die Hubfrequenz der Ladeluftkammer(n) gleich der Zündfrequenz des Motors ist.

Ein Verbrennungsmotor dieser Art ist aus der US-A-2 391 163 bekannt. Der Lader ist als Kolbenlader ausgebildet, wobei ein Maximum an Ladedruck mit einem Minimum an Laderarbeit erreicht werden soll. Ausserdem soll vom Lader ein Brennstoff-Luft-Gemisch in den Motorzylinder zu Beginn des Arbeitshubs des Motorkolbens eingedrückt und die Zufuhr dieses zusätzlichen, unter hohem Druck stehenden Gemisches während eines Teils des Arbeitshubs des Motorkolbens aufrechterhalten werden, um die Verbrennungsdauer zu verlängern. Die höchste Verdichtung im Lader muss also stets dann erreicht werden, wenn der Motorkolben seinen Arbeitshub beginnt, weshalb die Hubfrequenz der Ladeluftkammer auf die Zündfrequenz des Motors abgestimmt ist. Die Verbindung zwischen Ladeluftkammer und Motorzylinder wird durch ein Ventil gesteuert, das die Verbindung frei gibt, sobald der Laderdruck einen aus dem Motorzylinder stammenden und durch ein Rückschlagventil gehaltenen Schliessdruck überwindet. Oberer und unterer Totpunkt der Bewegung des Laderkolbens können gemeinsam verstellt werden, um dadurch den Laderdruck zu beeinflussen. Hierzu dient ein manuell zu betätigender Einstellhebel.

Bisher zur zur Aufladung von Verbrennungsmotoren der Kolbenbauart angewandte Lader weisen einen hohen Energie- und Bauaufwand auf, der insbesondere für kleine Kraftfahrzeugmotoren nicht mehr tragbar ist. Der mechanisch angetriebene Verdrängerlader ist insgesamt jedoch wegen seiner guten Drehmomentcharakteristik bei niedrigen Drehzahlen für kleine Personenkraftfahrzeuge noch am ehesten geeignet. Der bereits erwähnte hohe Bauaufwand, der insbesondere auch von der schwer realisierbaren Anpassung der Luftförderung an den der Betriebssituation entsprechenden Bedarf herrührt, und der hohe Energiebedarf, der von der Motorkurbelwelle aus zur Verfügung gestellt werden muss, haben den Einsatz von mechanischen Ladern bei kleineren Fahrzeugen bisher weitgehend verhindert.

Der Erfindung liegt die Aufgabe zugrunde, einen Verbrennungsmotor der eingangs erwähnten Art so auszugestalten, dass sich der Laderbetrieb insbesondere auch bei kleinen Fahrzeugen lohnt.

Die Lösung dieser Aufgabe besteht darin, dass die Phasenlage des Laders zu der des Motors veränderbar ist.

Es kann also die Förderbewegung des Laders auf die Zeitspanne abgestimmt werden, in welcher der zu ladende Motorzylinder aus dem Lader mit Luft zu versorgen ist. Hierdurch ergibt sich die Möglichkeit zu einem Laderbetrieb mit relativ geringem Energieaufwand, weil die Luft aus dem Lader ohne Überwindung eines Gegendrucks direkt in den jeweils zu füllenden Motorzylinder verdrängt werden kann; der Energieaufwand zur Überwindung eines Ventils, wie er bei der Konstruktion nach der US-A-2 391 163 aufzubringen ist bzw. zum Ausschieben der Luft in einen Speicher oder zum Zurückdrängen des Motorkolbens beim Einschieben der vorverdichteten Luft in den Motorzylinder, entfällt.

Durch die Phasenveränderung kann die zeitliche Lage des Ladedruckmaximums verändert werden. Dadurch kann festgelegt werden, ob die aus dem Lader ausgeschobene Luft zu Beginn des Saughubs, während des Saughubs oder am Ende des Saughubs in den Motorzylinder ausgeschoben wird.

Man kann die Phasenlage entweder vor Inbetriebnahme des Motors einstellen oder während des Motorbetriebs. Ist die Phasenlage vor Inbetriebnahme des Motors fest eingestellt worden, so ist es zweckmässig, dass in die Ladeluftleitung zwischen dem Lader und dem zu ladenden Motorzylinder ein einstellbarer Druckregler einbezogen ist.

Der Motor kann aber auch derart gestaltet sein, dass sich die Phasenlage während des Betriebs des Motors durch eine die Antriebsverbindung zwischen Motorkurbelwelle und Lader einbezogene Vorrichtung verändern lässt. In diesem Fall kann durch die Veränderung der Phasenlage während des Motorbetriebs eine Luftmengenregelung durchgeführt werden.

Vorzugsweise ist das Hubvolumen einer einzelnen Ladeluftkammer auf den maximalen Bedarf eines zu ladenden Motorzylinders abgestimmt, wobei unter maximalem Bedarf diejenige Luftmenge verstanden wird, die bei der vorgesehenen Betriebsweise des Motors während eines Arbeitsspiels eines Motorzylinders maximal aus dem Lader zugeführt werden soll. Falls der Lader die Luft während des gesamten Saughubs in den Motorzylinder ausschiebt, entspricht der maximale Bedarf der gesamten Ladung im Motorzylinder bei Einlassschluss.

Noch eine weitere vorteilhafte und energiesparende Ausführungsform besteht darin, dass das Hubvolumen einer einzelnen Laderkammer der im zu ladenden Motorzylinder zusätzlich zu einer angesaugten Luftmenge zu deren Verdichtung auf den Ladedruck maximal gewünschten Luftmenge entspricht und dass die Phasenlage der Kolbenbewegung des Laders im Verhältnis zur Kolbenbewegung des Motors so abgestimmt ist, dass der Lader während der Motorkolbenbewegung im Bereich des unteren Totpunkts die maximal gewünschte, zusätzliche Luftmenge in den Motorzylinder einschiebt.

Aus der FR-A-437 926 ist ein mit einem mechanischen Kolbenlader versehener Viertaktmotor bekannt, bei welchem in die Verbindungsleitung zwischen Lader und Einlassventil des Motors eine mit der Atmosphäre in Verbindung stehende Leitung einmündet, wobei dieser Einmündungsbereich mit einem Ventil versehen ist, welches entweder eine Ansaugung von Umgebungsluft durch den Motorkolben ermöglicht, oder die Verbindung zur Atmosphäre schliesst und die Verbindung des Einlassventils mit dem Lader herstellt. Durch diese Konstruktion ist es möglich, dass der Motorzylinder zunächst Umgebungsluft ansaugt und während der Motorkolbenbewegung im Bereich des unteren Totpunkts nach der Umstellung des Ventils eine zusätzliche, vorher verdichtete Luftmenge aus dem Lader enthält. Bei der bekannten Konstruktion ist keine Vorrichtung vorgesehen, welche es gestattet, die Phasenlage des Laders zu der des Motors zu verändern.

Wenn in die Antriebsverbindung zwischen Motorkurbelwelle und Lader eine Vorrichtung zur Veränderung der Phasenlage einbezogen ist, kann diese vorteilhafter Weise als Bandtrieb ausgebildet sein, bei dem das Verhältnis der Bandlängen zwischen treibendem und losem Bandtrum steuerbar ist. Eine derartige Einrichtung zur Ventilsteuerung bei Viertaktmotoren ist an sich aus der GB-A-1 024 846 bekannt, wo sie zwischen Motorkurbelwelle und Nockenwelle angeordnet ist. Für die Zwecke der vorliegenden Erfindung kann diese an sich bekannte Vorrichtung zwischen der Motorkurbelwelle und dem Laderantrieb angeordnet sein.

Weitere vorteilhafte Ausgestaltungen der Erfindung ergeben sich aus den Unteransprüchen in Verbindung mit der Beschreibung.

Dem erfindungsgemässen Verfahren oder Motor ähnliche Verfahren bzw. Motoren sind Gegenstand weiterer Anmeldungen mit gleichem Zeitrang. So betrifft die EP-A-0 126 464 ein Verfahren zur Zufuhr von Ladeluft in den Brennraum einer Verbrennungskraftmaschine, bei welchem die aus dem Lader verdrängte Luft direkt in den Motorbrennraum überströmt und bei welchem die vorverdichtete Luft gekühlt und anschliessend auf höchstens Umgebungsdruck entspannt wird, wobei der Entspannungsbeginn durch Veränderung der Phasenlage zwischen Motorkolben und Laderkolben festgelegt wird.

Die EP-A-0 126 464 betrifft ein Ladeverfahren, bei dem die Luft durch einen abgasgetriebenen Lader zusätzlich zu einer angesaugten Luftmenge in den Motorbrennraum eingebracht wird. Die EP-A-0 126 466 hat einen Abgaslader zum Gegenstand, der zur optimalen Nutzung der Abgasenergie eine auf das Abgas einwirkende Taktsteuerung aufweist. Die EP-A-0 126 463 betrifft ein Verfahren zum Einbringen der Ladeluft in die Zylinder eines Mehrzylinder-Verbrennungsmotors im Wege der Nachladung mit Hilfe eines Abgasladers, der durch die natürlichen Abgasimpulse angetrieben wird und die Luft aus dem Lader direkt in den Verbrennungsraum des Motors ausschiebt. Diese Luft wird bei überhöhtem Druck gekühlt und anschliessend auf den endgültigen Ladedruck entspannt.

Anhand der nun folgenden Beschreibung der in der Zeichnung dargestellten Ausführungsbeispiele der Erfindung wird diese näher erläutert.

Es zeigt:

Fig. 1 eine schematische Darstellung eines Zylinders eines Verbrennungsmotors und eines ihm zugeordneten mechanischen Laders,

Fig. 2 einen schematischen Querschnitt durch einen Lader der in Fig. 1 gezeigten Art in vergrössertem Massstab,

Fig. 3 eine Ansicht in Richtung des Pfeils III in Fig. 2,

Fig. 4 eine Variante zu Fig.3,

Fig. 5 eine schematische Darstellung eines zugleich als Entspanner betreibbaren mechanischen Laders,

Fig. 6 einen schematischen Schnitt durch einen mit einer Leckageabteilung versehenen Laderkolben,

Fig. 7 eine Ladervariante mit einer Gegengewichtsanordnung für den Ausgleich der Massenkräfte,

Fig. 8 ein Arbeitsdiagramm einer konventionellen Aufladung,

Fig. 9 ein Arbeitsdiagramm der theoretisch bekannten sogenannten Nachladung,

Fig. 10 ein Arbeitsdiagramm einer ersten Betriebsvariante des erfindungsgemässen Motors,

Fig. 11 ein Arbeitsdiagramm einer zweiten Betriebsvariante eines erfindungsgemässen Motors,

Fig. 12 eine schematische Seitenansicht eines für die mechanische Verbindung des Laders mit dem Motorabtrieb versehenen Bandtriebs und

Fig. 13 eine andere Ausführungsform dieses Bandtriebs.

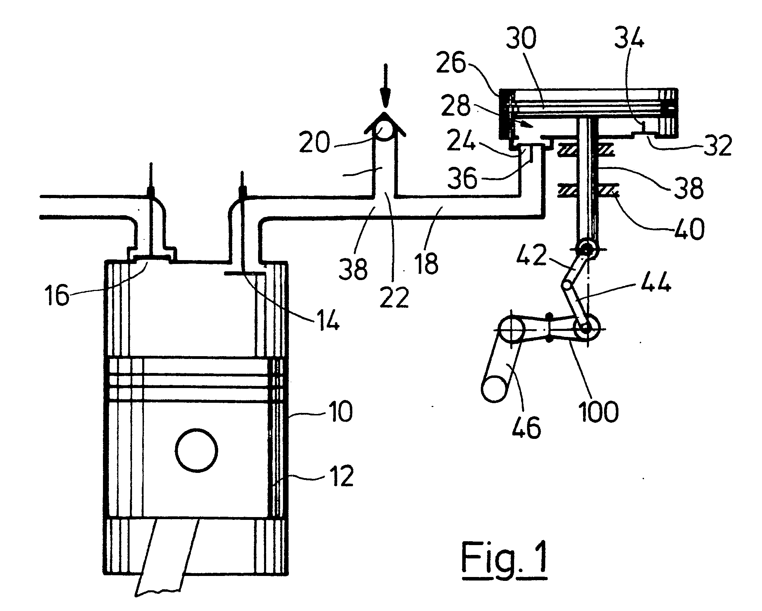

In Fig. 1 ist der Zylinder eines Motors mit einem darin beweglichen Kolben 12 sowie einem Einlassventil 14 und einem Auslassventil 16 dargestellt. Das Einlassventil 14 steht über eine Leitung 18 und eine Rückschlagklappe 20 direkt mit der Atmosphäre in Verbindung. Ausserdem ist über eine Abzweigung 22 der Luftauslass 24 eines Verdrängerladers 26 angeschlossen. Die Leitung 18 kann zwischen der Rückschlagklappe 20 und der Abzweigung 22 absperrbar sein.

Der Verdrängerlader 26 besitzt eine Laderkammer 28, in der eine Trennwand 30 in Form eines Flachkolbens beweglich angeordnet ist, um Ladeluft über einen Lufteinlass 32 anzusaugen und über den Luftauslass 24 in den Motorzylinder 10 zu verdrängen. Lufteinlass 32 und Luftauslass 24 sind mit Rückschlagklappen 34 bzw. 36 versehen. Die Trennwand 30 ist mit einem Führungsschaft 38 verbunden, der ausserhalb der Laderkammer 28 durch eine Führung 40 in axialer Richtung beweglich geführt ist, so dass Dichtung und Führung der Trennwand 30 voneinander getrennt sind und sich somit die Reibungswiderstände auf ein Minimum beschränken und ausserdem eine vorteilhafte Wartung und Schmierung möglich ist.

Der Führungsschaft 38 ist über ein Pleuel 42 mit einer Kurbel 44 verbunden, die über einen Riementrieb 100 von der Motorkurbelwelle 46 aus antreibbar ist, worauf später noch eingegangen wird.

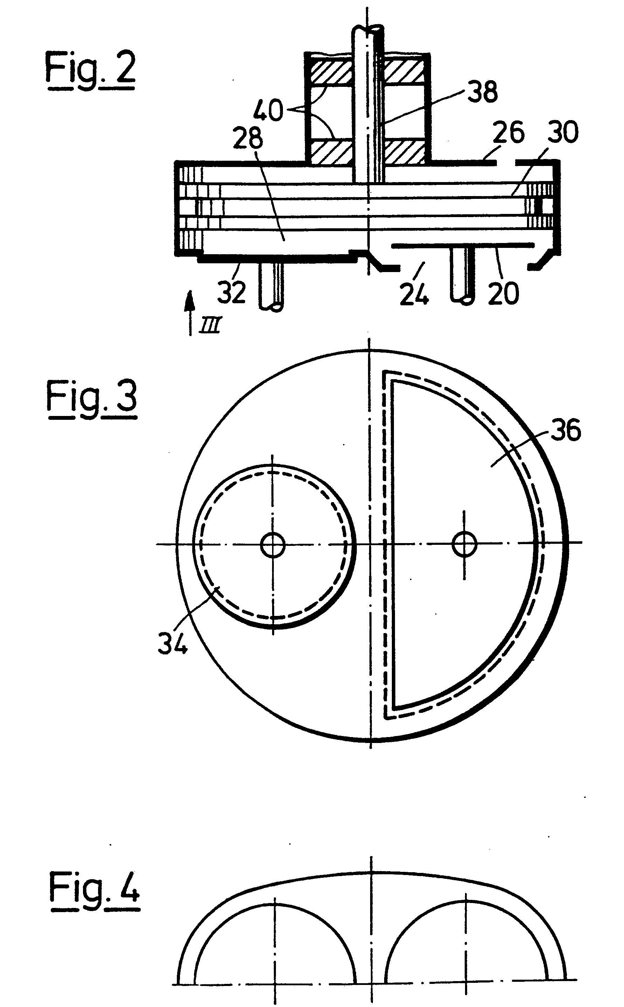

Die Fig. 2 zeigt eine ähnliche Bauform des Laders 26, wobei jedoch die Luftein- und -auslässe 24 bzw. 32 auf der vom Führungsschaft 38 abgewandten Seite der Trennwand 30 angeordnet sind.

Bei dieser Bauart eines Verdrängerladers kann die Trennwand 30 sehr flach ausgeführt werden, weil ihre Führung durch den Führungsschaft 38 erfolgt. Bei sehr kurzem Hub wird andererseits eine grosse Querschnittsfläche zur Aufnahme der Ein- und Auslassöffnungen 24 bzw. 32 erzielt, wodurch sich besondere Vorteile im Laderbetrieb ergeben.

Die Fig. 3 zeigt zwei mögliche Querschnittsformen für diese Öffnungen, wobei links ein Tellerventil als Luftauslassklappe 34 und rechts eine halbkreisförmige Lufteinlassklappe 36 gezeigt ist, die z. B. auch als Blattfeder ausgebildet sein könnte.

Die Fig. 4 zeigt eine Variante bei ovalem Laderquerschnitt, wobei sich auch mit runden Ventilen ein optimaler Öffnungsquerschnitt erzielen lässt.

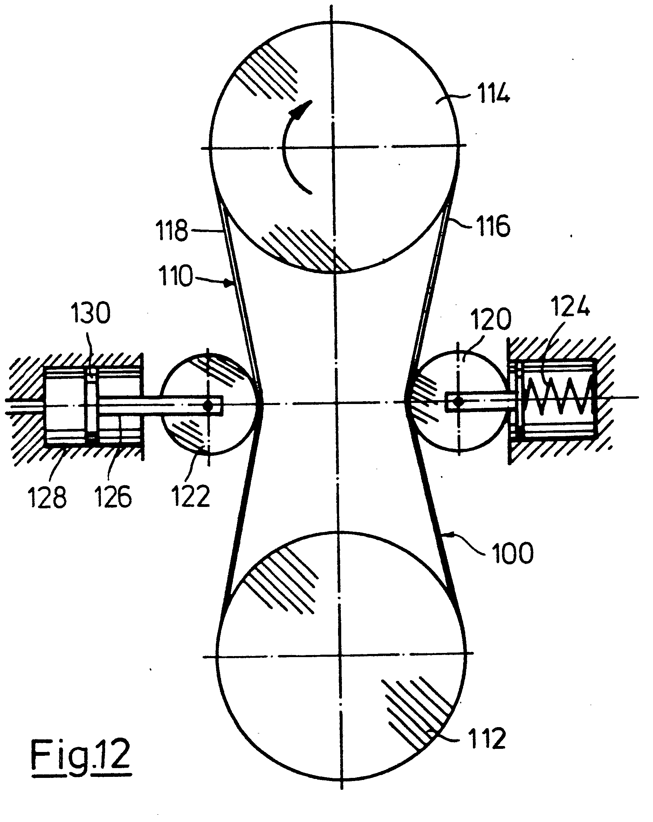

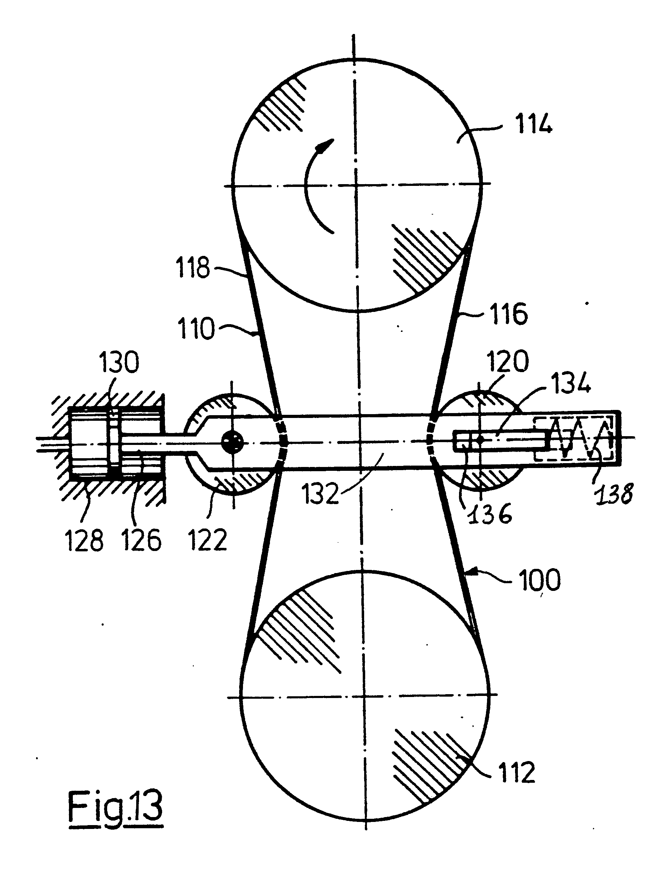

Der wesentliche Vorteil der gezeigten, mechanisch angetriebenen Verdrängerlader besteht darin, dass durch die mechanische Verbindung zur Motorkurbelwelle 46 auf einfache Weise die Hubfrequenz der Laderkammer(n) gleich der Zündfrequenz des Motors gehalten werden kann, wobei sich durch die mechanische Verbindung zudem leicht eine dem gewünschten Ladeeffekt entsprechende Phasenlage der Bewegung der Trennwand 30 im Verhältnis zur Kolbenbewegung des Motors festlegen lässt. Ausserdem kann diese Phasenlage, wo dies erwünscht ist, auf einfache Weise verändert werden, wie dies anhand der Fig. 12 und 13 noch erläutert wird. Insbesondere kann dadurch sehr einfach die Menge der Ladeluft entsprechend den jeweiligen Betriebsbedingungen geregelt werden.

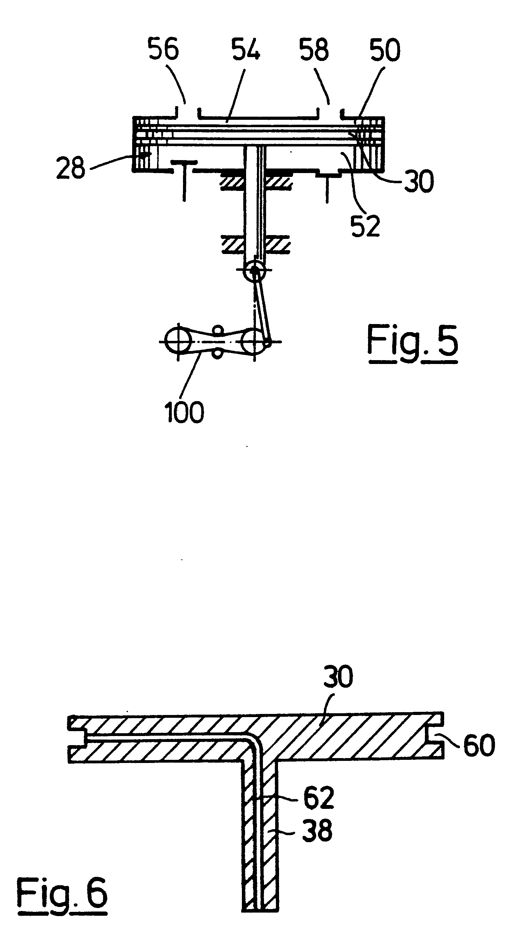

Die Fig. 5 zeigt einen Lader 50 der in Fig. 1 gezeigten Bauform, wobei jedoch durch die Trennwand in der Laderkammer 28 von der unteren Luftkammer 52 eine obere Abgaskammer 54 getrennt wird, die mit einem Abgaseinlass 56 und einem Abgasauslass 58 versehen ist. Damit kann der Lader 50 zugleich als Abgasentspanner eingesetzt werden, in welchem das über den Abgaseinlass 56 von den Motorzylindern zuströmende Abgas bei der Entspannung Arbeit an die Trennwand 30 abgibt, die von dort an den Motorabtrieb weitergeleitet wird. Dabei sind Abgas und Ladeluft nur durch die Trennwand 30 voneinander getrennt. Zur Verbesserung der Abdichtung ist der Umfang der Trennwand 30 daher mit einer Nut 60 versehen, zu deren beiden Seiten auf den Umfangsflächen der Trennwand 30 Dichtungen angebracht sein können. Die Nut 60 steht – wie Fig. 6 zeigt – über einen durch den Führungsschaft 38 verlaufenden Kanal 62 mit der Atmosphäre in Verbindung.

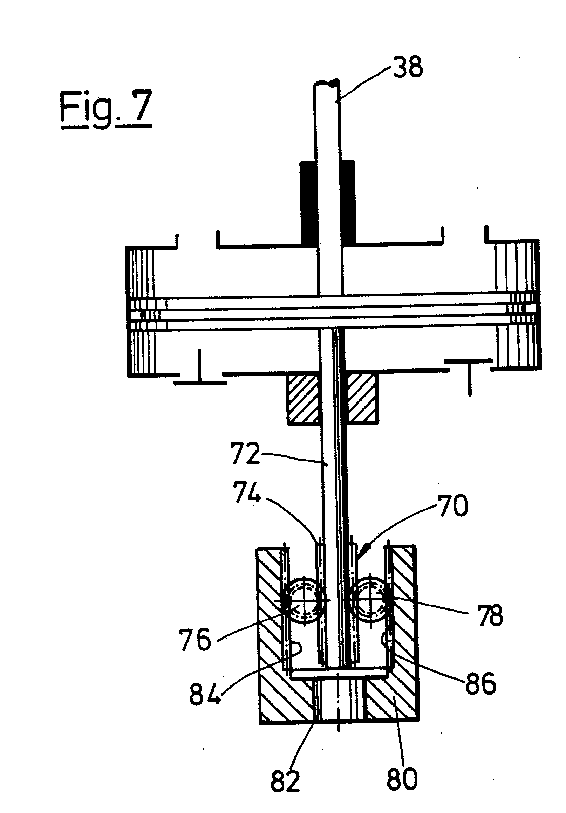

Die Fig. 7 zeigt beispielhaft die Möglichkeit, die Massenkräfte der Trennwand 30 auszugleichen. Zu diesem Zweck ist der Führungsschaft 38 in einem mindestens seiner Hublänge entsprechenden Abschnitt 70 beiderseits mit einer Verzahnung nach Art einer Zahnstange versehen. In diese Verzahnung 72 und 74 greift jeweils ein ortsfest gelagertes Ritzel 76 bzw. 78 ein. Ein Ausgleichs- oder Gegengewicht 80 ist mit einer Öffnung 82 für den Durchtritt des Führungsschaftes 38 versehen und besitzt zwei parallele Verzahnungen 84 und 86, die auf der vom Führungsschaft 38 abgewandten Seite der Ritzel 76 bzw. 78 in diese eingreifen, so dass das Gegengewicht jeweils eine zur Bewegung der Trennwand 30 gegenläufige Bewegung ausführt.

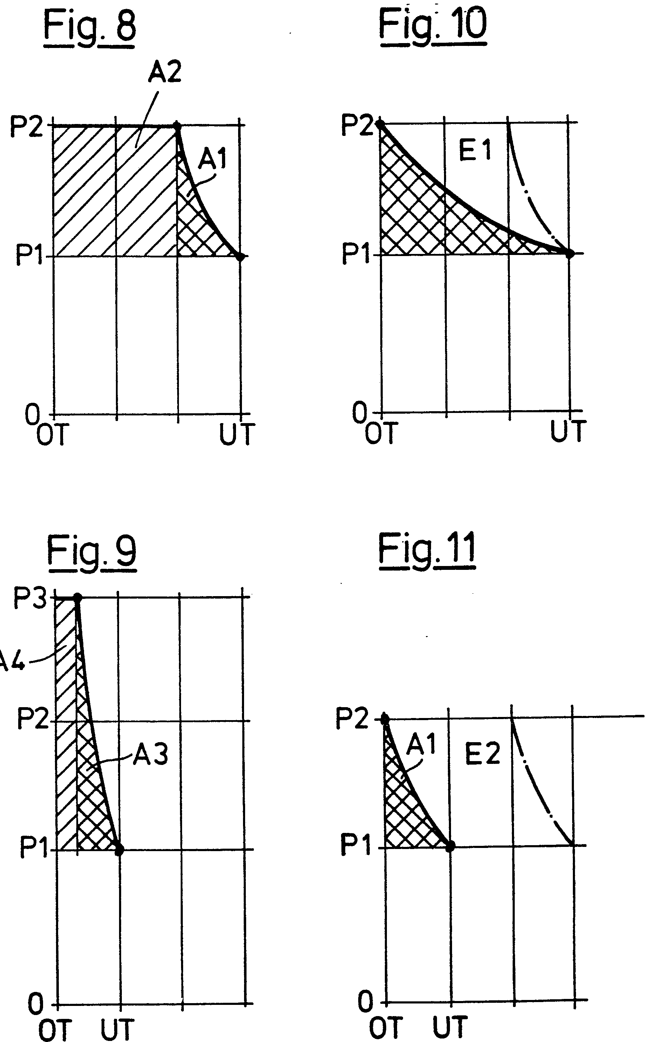

Mit den beschriebenen mechanischen Ladern kann dem Motorzylinder 10 jeweils die für ein Arbeitsspiel benötigte Ladeluft direkt zugeführt werden, wobei zwei Verfahrensweisen möglich sind. Entweder wird vom Motorkolben 12 während des Saughubs Ladeluft angesaugt und zugleich aus dem Lader, z. B. dem Lader 26 in Fig. 1, Luft in den Motorzylinder 10 verdrängt, so dass also ein Parallelbetrieb des Laders 26 zum Saughub besteht, weshalb diese Verfahrensweise als «Parallelladung» bezeichnet werden kann. Es kann aber auch zunächst nur durch den Kolben 12 Luft angesaugt werden und erst wenn sich der Kolben 12 im Bereich seines unteren Totpunkts befindet, wird aus dem Lader 26 verdichtete Luft nachgeschoben, weshalb hierfür die Kurzbezeichnung «direkte Nachladung» verwendet wird. Zum besseren Verständnis wird die «Parallelladung» und die «direkte Nachladung» nun anhand der Fig. 8 bis 11 im Vergleich mit bekannten Verfahren erläutert. In diesen Diagrammen ist auf der Abszisse jeweils das dem Kolbenhub entsprechende Hubvolumen der Laderkammer aufgetragen, wobei bei allen Beispielen der Luftbedarf 1,5 Liter beträgt und ein Volumen des zu ladenden Verbrennungsraums von 1 Liter zugrundegelegt ist, also eine gewünschte Verdichtung von $1,5:1$. Schadräume im System sind vernachlässigt. Auf der Ordinate ist der Druck aufgetragen, wobei der Druck P1 den Atmosphärendruck und der Druck P2 den Ladungsenddruck im Motorzylinder bezeichnet. Auf der Abszisse bezeichnet UT den unteren Totpunkt, d. h. die Stellung des Verdrängerladers, in welcher die Laderkammer innerhalb ihres Arbeitszyklus das grösste Volumen aufweist, und OT den oberen Totpunkt, d. h. die Stellung des Verdrängerladers, in welcher die Laderkammer innerhalb ihres Arbeitszyklus das kleinste Volumen aufweist.

Das Diagramm in Fig. 8 zeigt den Bewegungs- und Druckverlauf beim Verdrängerlader bei Durchführung der konventionellen Aufladung. Dabei wird die Ladeluft zunächst vom Atmosphärendruck P1 auf den Ladungsenddruck P2 verdichtet und dann aus dem Verdrängerlader in einen Zwischenspeicher (Luftverteiler) ausgeschoben, von wo die verdichtete Luft dann in den Motorzylinder abfliesst. Bei der Darstellung des Druckverlaufs ist zur Vereinfachung ein unendlich grosser Speicher angenommen worden, so dass nach der Verdichtung der Druck P2 konstant bleibt.

In Fig. 8 besteht keine direkte zeitliche Beziehung zwischen dem Verdichtungshub des Laders und dem Ansaughub des Motorkolbens, weil die Luft ihren Ladedruck beliebig lang vor Beginn des Ansaughubs des Motorkolbens erreicht. Man erkennt einen relativ kleinen Anteil A1 der aufzubringenden Arbeit, der die Verdichtungsarbeit darstellt, und einen demgegenüber wesentlich höheren Anteil A2, der die Arbeit zum Ausschieben der verdichteten Luft aus dem Lader in den Puffer darstellt, der durch den Zwischenspeicher bzw. das Luftverteilungssystem gebildet wird und üblicherweise ein Fassungsvermögen von mehreren Hubvolumina eines Motorzylinders bzw. einer Laderkammer aufweist. Bei der Aufladung nach Fig. 8 strömt die verdichtete Luft von Beginn des Saughubs an, d.h. nach dem Öffnen des Einlassventils, in den Motorzylinder. Die Energie A2 wird zwar im wesentlichen zurückgewonnen, wenn die Ladeluft in den Motorzylinder einströmt und den Motorkolben zurückdrängt, trotzdem muss diese Arbeit A2 vom Lader aufgebracht werden und verursacht wegen des involvierten Wirkungsgrades, etwa 0,33, einen beachtlichen Leistungsverlust sowie eine Erhöhung des Verbrauchs an Kraftstoff.

Die Fig. 9 zeigt den Verfahrensablauf bei der theoretisch vorgeschlagenen Nachladung. Dabei wird nur das Differenzvolumen zwischen dem gewünschten Luftbedarf und dem Volumen des zu ladenden Motorzylinders vom Verdrängerlader verdichtet. Dieses Differenzvolumen muss aber auf einen hohen Druck verdichtet werden und wird mit diesem hohen Druck in einen Speicher ausgeschoben, wobei die Verdichtungsarbeit mit A3 und die Ausschubarbeit mit A4 bezeichnet ist. Vom Speicher fliesst die verdichtete Luft gegen Ende des Saughubs nach Öffnung eines Taktventils in den Motorzylinder.

Sowohl bei der Aufladung nach Fig. 8, als auch bei der konventionellen Nachladung nach Fig. 9 ist keine Synchronisation zwischen der Bewegung des Verdrängerladers und der Kolbenbewegung des zu versorgenden Motorzylinders erforderlich oder vorgesehen, abgesehen von der Synchronisierung des Taktventils. Die Vorteile der Erfindung ergeben sich aus einer solchen Synchronisation, die durch die Übereinstimmung der Hubfrequenz der Ladeluftkammer bzw. Ladeluftkammern mit der Zündfrequenz des Motors gegeben ist, die durch entsprechende Phasenlage zwischen Motor und Lader so ausgelegt ist, dass die aus dem Lader verdrängte Luft unmittelbar – ohne Zwischenspeicher – in den Motorzylinder überströmt. Die Fig. 10 und 11 zeigen zwei Varianten dieser Verfahrensweise.

Bei dem in Fig. 10 dargestellten Verfahren findet der Ausschub- und Verdichtungshub des Verdrängerladers während der gesamten Dauer des Ansaughubs des Motorkolbens statt. Die Ladeluft wird durch die Kolbenbewegung im Motorzylinder angesaugt und parallel dazu wird die Luft aus dem Verdrängerlader ausgeschoben und wegen des grösseren Hubraums des Laders gleichzeitig vom atmosphärischen Druck P1 auf den Ladungsenddruck P2 verdichtet, weshalb diese Verfahrensweise nachfolgend als «Parallelladung» bezeichnet wird. Durch «nacheilende» Phasenverschiebung des Laderkolbens kann dieser Effekt noch gesteigert werden.

Bei dieser Parallelladung ist das vom Verdrängerlader geförderte Luftvolumen gleich gross wie bei der konventionellen, in Fig. 8 dargestellten Aufladung, jedoch wird der Ladungsenddruck P2 erst am Ende des Verdichtungshubs des Verdrängerladers, also im oberen Totpunkt, erreicht, was zeitlich mit dem Einlassende des entsprechenden Motorzylinders zusammenfällt. Wie sich aus einem Vergleich der Fig. 8 und 10 ergibt, ist der Arbeitsaufwand wesentlich geringer. Der Anteil an eingesparter Arbeit ist mit E1 gekennzeichnet.

Die Fig. 11 zeigt ein demgegenüber noch weiter verbessertes Verfahren, bei welchem die Luft ebenfalls unmittelbar aus dem Verdrängerlader in den Motorzylinder überströmt und bei welchem der Energiebedarf noch weiter abgesenkt ist. Bei diesem Verfahren saugt der Motorzylinder zunächst unter Atmosphärendruck stehende Luft an, ohne dass dabei zunächst Ladeluft aus dem Verdrängerlader verdichtet und ausgeschoben wird. Erst wenn sich der Kolben im Motorzylinder im Bereich seines unteren Totpunkts befindet, d.h. kurz vor dem Einlassschluss, wird vom Verdrängerlader das Differenzvolumen direkt in den Motorzylinder geschoben, um die noch unter Atmosphärendruck stehende, angesaugte Luft auf den gewünschten Ladungsenddruck P2 zu bringen. Im Gegensatz zu der theoretisch bereits bekannten, in Fig. 9 dargestellten Nachladung wird in diesem Fall die Verdichtung des Differenzvolumens zeitlich genau auf die Kolbenbewegung im Motorzylinder abgestimmt und direkt aus dem Verdrängerlader in den Verbrennungsraum gedrückt, weshalb dieses Ladeverfahren nachfolgend als «direkte Nachladung» bezeichnet wird.

Wie ein Vergleich der Fig. 8 und 11 zeigt, findet während des Verdichtungshubs bei der direkten Nachladung die in Fig. 8 mit A1 bezeichnete Verdichtungsarbeit statt, die den Druck im Motorzylinder auf den Ladungsenddruck bringt. Der Anteil der gegenüber der konventionellen Aufladung eingesparten Arbeit ist mit E2 bezeichnet. Bei dieser Betriebsweise liegen die Antriebsleistungen für die Ladevorrichtung – wie theoretisch nachweisbar ist – bei etwa 18% der Antriebsleistung bei konventioneller Aufladung, wo die Ladeluft zuerst verdichtet und in einen Puffer ausgeschoben wird und dann in den Zylinder einströmt.

Für die beschriebenen Verfahren der «Parallelladung» und der «direkten Nachladung» ist die Synchronisation zwischen der Bewegung der Motorkolben und der Bewegung des Laderkolbens wichtig. Dadurch wird aber auch eine Möglichkeit eröffnet, die Mengenregelung über eine Veränderung der Phasenlage zwischen Motorbewegung und Laderbewegung durchzuführen. Dies ist insbesondere interessant für die Mengenregelung eines mechanisch betriebenen Laders, wie er beispielsweise in Fig. 1 dargestellt ist, weil dadurch die sonst erforderliche, sehr aufwendige Mengenregelung durch Hubveränderung oder Drehzahlregelung entfallen kann.

Der Lader 26 in Fig. 1 ist über einen insgesamt mit 100 bezeichneten Bandtrieb von der Motorkurbelwelle 46 aus antreibbar, wobei der Bandtrieb 100 eine Vorrichtung umfasst, die es ermöglicht, die Phasenlage zwischen der Motorkurbelwelle 46 und der zum Antrieb des Laders 26 dienenden Kurbel 44 zu verändern. Diese Vorrichtung wird anschliessend anhand der Fig. 12 und 13 noch näher erläutert.

Im Motorzylinder 10 (Fig. 1) wird die volle Füllmenge bei der «direkten Nachladung» dann erreicht, wenn der durch den Lader 26 bewirkte Druckanstieg auf den maximalen Ladedruck zeitlich genau mit dem Schliessen des Einlassventils 14 am Motorzylinder 10 synchronisiert ist. Verschiebt man den Zeitpunkt, zu dem der Lader seinen Förderhub beendet, gegenüber dem «optimalen» Zeitpunkt, an dem das Einlassventil schliesst, wird der maximale Druck P2 im Zylinder nicht mehr erreicht, d.h., die Füllmenge ist geringer.

Man kann dabei den Lader gegenüber der Bewegung des Motorkolbens 12 voreilen oder nacheilen lassen. Erreicht der Lader das Ende seines Förderhubs bevor das Einlassventil 14 schliesst, überlagern sich die Ansaugung durch den Motorkolben 12 und die Luftförderung durch den Lader 26 stärker und die Gesamtmenge der vom Motorzylinder 10 während des Saughubs angesaugten Luft verringert sich entsprechend. Erreicht der Lader das Ende seines Förderhubs erst nach dem Schliessen des Einlassventils 14, gelangt nicht mehr das gesamte Fördervolumen des Laders in den Motorzylinder 10 und die Füllmenge ist ebenfalls geringer. Dabei wird allerdings vom Lader in der Endphase des Förderhubs eine zunächst nutzlose Arbeit geleistet. Der sich in der Ansaugleitung des Motors dadurch aufbauende Druck kann sich aber nach dem Öffnen des Einlassventils 14 als nützlich erweisen, um die Spülung des Motorzylinders 10 zum Austreiben des Abgase zu bewirken.

Der in Fig. 12 schematisch dargestellte Bandtrieb 100 umfasst ein Band 110, vorzugsweise einen Zahnriemen, der über insgesamt vier Rollen geführt ist, nämlich eine Antriebsrolle 114, eine Abtriebsrolle 112 und zwischen Abtriebsrolle 112 und Antriebsrolle 114 in Bandlaufrichtung gesehen über eine quer zur Bandlaufrichtung bewegliche Rolle 120, sowie zwischen Antriebsrolle 114 und Abtriebsrolle 112 über eine quer zur Bandlaufrichtung einstellbare Rolle 122. Die Rolle 120 liegt damit am rücklaufenden Trum 116 und die Rolle 122 am antreibenden Trum 118 des Bandes 110 an. Diese Anordnung ist deshalb zweckmässig, weil die Rolle 120 durch eine Feder 124 gegen das Band 110 gedrückt wird, um die gewünschte Bandspannung aufrechtzuerhalten. Durch die Möglichkeit, dass sich die Rolle 120 etwas quer zur Bandrichtung bewegt, ohne dass dies durch eine Verstellung der Rolle veranlasst ist, würde die Anordnung der Rolle 120 im Bereich des antreibenden Trums geringfügige Längenveränderungen des antreibenden Trums in unkontrollierter Weise ermöglichen und damit eine Störung des absoluten Gleichlaufs von antreibender Rolle 114 und Abtriebsrolle 112.

Die Rolle 122 ist dagegen in ihrer ganzen Lage quer zur Laufrichtung des Bandes 110 genau einstellbar. Beim gezeigten Beispiel ist hierzu die Rolle 122 an einer Kolbenstange 126 gelagert, die mit einem in einem Zylinder 128 verschieblich angeordneten Kolben 130 verbunden ist, der beidseitig hydraulisch beaufschlagbar ist, d.h., es handelt sich beim Zylinder 128 mit dem Kolben 130 um einen doppeltwirkenden Hydraulikzylinder, durch den die Position der Rolle 122 genau einstellbar ist. Die hydraulische Betätigung ermöglicht eine einfache Regelung der Phasenlage des Bandtriebs in Abhängigkeit von extern ermittelten Parametern, nämlich den Betriebsdaten des Kraftfahrzeugs und seines Verbrennungsmotors, wenn der Bandtrieb nach dem in der Einleitung bereits geschilderten Beispiel zur Ventilsteuerung des Motors eingesetzt ist.

Wird die Rolle 122 in Fig. 12 nach rechts bewegt, verlängert sich das antreibende Trum 118, während sich das rücklaufende Trum 116 entsprechend verkürzt. Die Abtriebsrolle eilt dadurch der Antriebsrolle vor. Bewegt man die Rolle 122 in der Gegenrichtung, gelangt das antreibende Trum 118 allmählich in seine kürzeste, gestreckte Lage, welche man zweckmässig einer Nacheilung der Abtreibsrolle 112 gegenüber der Antriebswelle 114 zuordnet, während die Phasenverschiebung NULL etwa in der Mitte zwischen diesen beiden Stellungen der Rolle 122 vorgesehen werden sollte, wenn sowohl die Möglichkeit einer Voreilung als auch einer Nacheilung erwünscht ist. Die Anordnung ist bei beiden Ausführungsbeispielen jeweils so getroffen, dass in der einen Endstellung der einstellbaren Rolle 122 das eine Trum 116 oder 118 gesteckt verläuft und das jeweils andere Trum 118 oder 116 dann seine grösste Auslenkung aus der gestreckten Lage aufweist. Unter diesen Voraussetzungen sind Variationen in der Anordnung der Rollen 120 und 122 möglich. So könnte in Fig. 12 die Rolle 120 z.B. auf der anderen Bandseite angeordnet sein, müsste dann aber das Trum 116 statt nach links nach rechts aus der gestreckten Stellung drücken. Bei der Anordnung nach Fig. 12 muss die Feder 124 die Stellbewegung der Rolle 122 ausgleichen. Bei der Ausführungsform nach Fig. 13 ist dies nicht nötig, es kann dort also eine kleinere, härtere Feder verwendet werden.

Bei der Ausführungsform nach Fig. 13 ist mit der Kolbenstange 126 ein Lagerelement 132 verbunden, in dem die Rolle 122 fest gelagert ist. Die Rolle 120 ist in einem Schieber 134 gelagert, der im Lagerelement 132 quer zur Laufrichtung des Bandes 110 begrenzt beweglich ist, wozu Führungsschlitze 136 zur Aufnahme des Schiebers 134 dienen können. Der Schieber 134 ist am Lagerelement 132 über eine Feder 138 abgestützt. Diese Feder übernimmt im wesentlichen die Aufgabe, das Band 110 unter der gewünschten Spannung zu halten.

Wird der Kolben 130 bewegt, nehmen die Rollen 120 und 122 an dieser Bewegung teil. Da beide Rollen 120 und 122 an der gleichen Fläche des Bandes 110 anliegen, wird das eine Trum 116 um annähernd das gleiche Mass kürzer, um das das andere Trum 118 sich verkürzt oder umgekehrt. Geringe Abweichungen, die mit dem Verlassen einer symmetrischen Position beider Trums 116

und 188 auftreten, können von der Feder 138 ausgeglichen werden.

Die Wirkungsweise wäre gleich, wenn beide Rollen 120 und 122 auf der jeweils anderen Bandseite angeordnet wären. Es müsste nur die Anordnung so getroffen sein, wie dies am Ende der Beschreibung der Fig. 12 erläutert ist. Unter dieser Voraussetzung, dass nämlich in der einen Endstellung das eine Trum gestreckt, das andere dagegen maximal ausgelenkt ist und umgekehrt, könnte man mit den gleichen Vorteilen hinsichtlich der Dimensionierung der Feder 138 die Rolle 120 auch mittels des Schiebers 134 in einem zur Kolbenstange 126 und der an dieser gelagerten Rolle 122 zwangsweise gegenläufig bewegten Lagerelement anordnen, wenn dies auch insgesamt wegen der aufwendigeren Konstruktion nicht sehr zweckmässig erscheinen mag. Es zeigt dies aber, dass der Grundgedanke der Erfindung auf sehr verschiedene Weise verwirklicht werden kann und nicht auf die erläuterten Beispiele beschränkt ist.

Um die Bandspannung justieren zu können, wird vorzugsweise die Kraft der Feder 124 bzw. 138 einstellbar sein, wie dies bei Bandtrieben an sich bekannt ist.

Statt des in der Zeichnung gezeigten und vorstehend beschriebenen Kurbeltriebs 100 können andere Einrichtungen zur Kraftübertragung auf mechanischem oder z.B. auch hydraulischem Wege verwendet werden, sofern sie mit der Möglichkeit der Phasenverschiebung zwischen An- und Abtrieb ausgestattet sind.

Für die Durchführung der «direkten Nachladung» ist es bei Mehrzylindermotoren vorteilhaft, den Lader mit einer gegenüber der Kurbelwellendrehzahl des Motors doppelten Drehzahl zu betreiben und die Zahl der Laderkammern halb so gross zu halten, wie die der Motorzylinder, um die Ausschubphase des Laders im Vergleich zum Saughub des Motors zu verkürzen.

**Patentansprüche**

1. Verbrennungsmotor der Kolbenbauart mit einem von der Motorkurbelwelle aus mechanisch angetriebenen, mindestens eine in ihrem Volumen veränderbare Ladeluftkammer (28) aufweisenden Verdrängerlader zur Verdichtung der Ladeluft, wobei die Hubfrequenz der Ladeluftkammer(n) (28) gleich der Zündfrequenz des Motors ist, dadurch gekennzeichnet, dass die Phasenlage des Laders (26, 50) zu der des Motors veränderbar ist.

2. Verbrennungsmotor nach Anspruch 1, dadurch gekennzeichnet, dass in die Ladeluftleitung zwischen dem Lader (26) und dem zu ladenden Motorzylinder (10) als Luftmengenregler ein einstellbarer Druckregler einbezogen ist.

3. Verbrennungsmotor nach einem der vorhergehenden Ansprüche, dadurch gekennzeichnet, dass das Hubvolumen einer einzelnen Ladeluftkammer (28) der im zu ladenden Motorzylinder (10) zusätzlich zu einer angesaugten Luftmenge zu deren Verdichtung auf den Ladedruck maximal gewünschten Luftmenge entspricht und dass die Phasenlage der Kolbenbewegung des Laders (26) im Verhältnis zur Kolbenbewegung des Motors so abgestimmt ist, dass der Lader (26) während der Motorkolbenbewegung im Bereich des unteren Totpunkts die maximal gewünschte zusätzliche Luftmenge in den Motorzylinder (10) einschiebt.

4. Verbrennungsmotor nach Anspruch 3, dadurch gekennzeichnet, dass dem Einlass des Motorzylinders (10) eine den Lader (26) umgehende Luftversorgung (18, 20) zugeordnet ist, die nur in Richtung auf den Motorzylinder (10) durchströmbar ist.

5. Verbrennungsmotor nach Anspruch 4, dadurch gekennzeichnet, dass die zusätzliche Luftversorgung wahlweise zuschaltbar ist.

6. Verbrennungsmotor nach Anspruch 1, dadurch gekennzeichnet, dass zwischen der Kurbelwelle (46) des Motors und dem Lader (26, 50) ein Bandtrieb (100) angeordnet ist, bei dem das Verhältnis der Bandlängen zwischen treibendem (118) und losem (116) Bandtrum steuerbar ist.

7. Verbrennungsmotor nach Anspruch 6, dadurch gekennzeichnet, dass ein Band (110) über eine Antriebsrolle (112) und eine Abtriebsrolle (114) und eine quer zur Laufrichtung des Bandes (110) einstellbare Rolle geführt ist.

8. Verbrennungsmotor nach Anspruch 3, dadurch gekennzeichnet, dass die Drehzahl des Laders grösser ist als die Drehzahl des Motors und dass die Zahl der Ladeluftkammern reziprok zum Drehzahlverhältnis zwischen Lader und Motor abnimmt.

**Claims**

1. An internal combustion engine of the piston type comprising, for compression of the combustion air, an adjustable volume displacement charger which has at least one combustion air chamber (28) able to be changed in its volume, said charger being mechanically driven from the engine crankshaft, the stroke frequency of the combustion air chamber or chambers (28) being equal to the ignition frequency of the engine, characterized in that the phase relationship of the charger (26, 50) to that of the engine is able to be adjusted.

2. The internal combustion engine as claimed in claim 1 characterized by an adjustable pressure regulator placed in the combustion air duct between the charger (26) and the engine cylinder (10) to be charged as a pressure controller.

3. The internal combustion engine as claimed in any one of the preceding claims characterized in that the strokke volume of a single combustion air chamber (28) is equal to the amount of air in the engine cylinder (10) desired at the most, in addition to an amount of air induced by suction, for the compression thereof to the charging pressure, and in that the phase relationship of the piston motion of the charger (26) to that of the engine is so set that the charger (26) feeds the additional amount of air required at the most into the engine cylinder (10) during the engine piston motion in the vicinity of the lower dead center position of the engine piston.

4. The combustion engine as claimed in claim 3 characterized by an air supply means (18, 20) bypassing the charger (26) and associated with the inlet port of the engine cylinder (10), flow through the supply means only being possible towards the engine cylinder (10).

5. The internal combustion engine as claimed in claim 4 characterized in that the additional air supply is able to be put in circuit selectively.

6. The internal combustion engine as claimed in claim 1 characterized in that between the crankshaft (46) of the engine and the charger (26, 50) a belt drive (100) is provided, in the case of which the ratio of the belt lengths between the driving (118) and the slack (116) belt runs may be altered.

7. The internal combustion engine as claimed in claim 6 characterized in that a belt (110) runs over a drive pulley (112) and an output pulley (114) and over a pulley adjustable transversely in relation to the direction of motion of the belt (110).

8. The internal combustion engine as claimed in claim 3 characterized in that the speed of rotation of the charger is greater than the speed of rotation of the engine and in that the number of combustion air chambers decreases in a reciprocal relation to the speed ration between the charger and the engine.

**Revendications**

1. Moteur à combustion interne du type à piston, comportant un compresseur à déplacement positif, présentant au moins une chambre d'air d'alimentation (28) à volume variable, pour la compression de l'air d'alimentation, compresseur entraîné mécaniquement par le vilebrequin du moteur, la fréquence de la course de la chambre ou des chambres d'air d'alimentation (28) étant égale à la fréquence d'allumage du moteur, caractérisé en ce que la position des phases du compresseur (26, 50) est modifiable par rapport à celle du moteur.

2. Moteur à combustion interne suivant la revendication 1 caractérisé en ce que, dans la conduite d'air d'alimentation, entre le compresseur (26) et le cylindre du moteur (10) à alimenter, est intégré un régulateur de pression réglable.

3. Moteur à combustion interne suivant l'une quelconque des revendications précédentes, caractérisé en ce que le volume balayé à chaque course dans chaque chambre d'air d'alimentation (28) correspond à la quantité d'air maximale souhaitée dans le cylindre du moteur (10) à alimenter, plus une quantité d'air aspirée comprimée à la pression d'alimentation, et en ce que la position des phases du mouvement du piston du compresseur (26) est déterminée, en fonction du mouvement du piston du moteur, d'une façon telle que le compresseur (26) injecte dans le cylindre du moteur (10) la quantité d'air supplémentaire souhaitée maximale pendant le déplacement du piston du moteur dans la zone du point mort bas.

4. Moteur à combustion interne suivant la revendication 3, caractérisé en ce qu'à l'alimentation du cylindre du moteur (10) est ajoutée une alimentation en air (18, 20) contournant le compresseur (26), alimentation qui peut être traversée par le courant d'air seulement dans la direction du cylindre du moteur (10).

5. Moteur à combustion interne suivant la revendication 4, caractérisé en ce que l'alimentation en air auxiliaire peut être, si on le désire, mise hors circuit.

6. Moteur à combustion interne suivant la revendication 1, caractérisé en ce qu'entre le vilebrequin (46) du moteur et le compresseur (26, 50) est placée une transmission à courroie (100), dans laquelle le rapport des longueurs du brin menant (118) et du brin mené (116) de la courroie peut être commandé.

7. Moteur à combustion interne suivant la revendication 6, caractérisé en ce qu'une courroie (110) est guidée sur une poulie menante (112) et une poulie menée (114) et une poulie réglable perpendiculairement au déplacement de la courroie (110).

8. Moteur à combustion interne suivant la revendication 3, caractérisé en ce que le nombre de tours du compresseur est plus grand que le nombre de tours du moteur et en ce que le nombre des chambres d'air d'alimentation diminue, réciproquement, en fonction du rapport du nombre de tours entre le compresseur et le moteur.

Fig. 1

Fig. 2

Fig. 3

Fig. 4

Fig. 5

Fig. 6

Fig. 7

# Fig. 8

# Fig. 10

# Fig. 9

# Fig. 11

Fig.12

Fig.13